# EUROPÄISCHE PATENTANMELDUNG

(11) **EP 1 157 606 A2**
(43) Veröffentlichungstag der Anmeldung: **28.11.2001**
(21) Anmeldenummer: 01112553.1
(22) Anmeldetag: 23.05.2001
(51) Int. Cl.: A01G 25/09

(54) **Verfahren und Vorrichtung zum Betreiben eines selbstfahrenden Bewässerungsgerätes**

(30) Priorität: 24.05.2000 DE 10025391
(71) Anmelder: REGA GmbH, 78467 Konstanz (DE)
(72) Erfinder: Eckhardt, Friedrich, 78467 Konstanz (DE)
(74) Vertreter: Weiss, Peter, Dr.

(57) **Zusammenfassung**

Bei einem Verfahren zum Betreiben eines selbstfahrenden Bewässerungsgerätes mit einer Beregnungseinrichtung mit Wasseranschluss (8) und einer Turbine (11), über welche eine Trommel (16) zum Aufwickeln eines Zugseiles (17) mittels Wasser angetrieben wird, soll vor der Beregnungseinrichtung ein Teil des Bewässerungswassers abgezweigt und der Turbine (11) zugeführt und die Menge des abgezweigten Bewässerungswassers geregelt werden.

## Beschreibung

Die Erfindung betrifft ein Verfahren zum Betreiben eines selbstfahrenden Bewässerungsgerätes mit einer Beregnungseinrichtung mit Wasseranschluss und einer Turbine, über welche eine Trommel zum Aufwickeln eines Zugseiles mittels Wasser angetrieben wird, sowie eine Vorrichtung hierfür.

Abgesehen von den verschiedenen vielfältigen Möglichkeiten, Wasser zur Bewässerung von Pflanzen und Flächen zu verteilen, hat sich speziell für bestimmte Einsatzmöglihckeiten in den Bereichen Grünflächenbewässerung von Sportanlagen, Parkflächen, Golfplätzen oder Baumschulen ein sehr mobiles, handliches Bewässerungsgerät bewährt, das, durch die vorhandene Wasserkraft angetrieben, in der Lage ist, grössere Flächen mobil zu bewässern.

Die hier beschriebenen Bewässerungsgeräte werden über Wasserkraft angetrieben und über ein Zugseil, das auf eine Trommel aufgewickelt wird, in Längsrichtung fortbewegt.

### Bekannt sind folgende Antriebssysteme:

### Antrieb durch Rückstosskraft

In einem Drehkreuz eingeschraubte Düsenarme von ca. 80 cm Länge, an deren Ende jeweils eine Düse montiert ist, werden durch die entstehende Rückstosskraft des an den Düsen austretenden Wassers in Drehbewegung versetzt. Die Drehbewegung wird über das Drehkreuz mittels eines Untersetzungs-Getriebes (Stirnrad-Schneckenrad-Getriebe) auf die Seiltrommel übertragen. Eine Regulierung der Drehgeschwindigkeit bzw. der daraus resultierenden Einzugsgeschwindigkeit der Seiltrommel ist nur durch Verstellen des Austrittswinkels vom Düsenstrahl zur Drehachse möglich. Ferner ist nachteilig, dass durch notwendige Dichtungen am Drehkreuz im Verhältnis zu der zur Verfügung stehenden Rückstosskraft des Antriebes ein relativ grosser Reibungsverlust entsteht, welcher den Wirkungsgrad des Antriebes negativ beeinflusst. Die Einstellung der Einzugsgeschwindigkeit des Drahtseils und somit die Laufgeschwindigkeit der Bewässerungsvorrichtung ist nur sehr grob durch Verstellen des Austrittswinkels vom Düsenstrahl zur Drehachse möglich. Ein mehrstufiges Schaltgetriebe oder ein Vario-Getriebe für die Regelung der Laufgeschwindigkeit ist von den Kosten her gesehen im Verhältnis zu den bestehenden Verkaufspreisen nicht realisierbar.

### Wasserbetriebener Hydraulikzylinder

Eine Schubstange des Hydraulikzylinders treibt über eine Klinke, welche in ein Klinkenrad eingreift, die Seiltrommel an. Der Zylinder wirkt einwegig, der Rückhub ist demnach ein Leerhub.

### Turbinenantrieb

In den meisten Fällen wird heute ein Turbinenantrieb verwendet, wobei das gesamte Beregnungswasser eine geschlossene Turbinenkammer durchströmt. Die Einspeisung erfolgt radial, der Austritt tangential. Das bedeutet, dass das gesamte Wasser über eine Turbine zum Regner geführt wird. Da die Wurfdüsen am Regner mit unterschiedlichen Düsendurchmessern ausgerüstet sind, bedeutet dies, dass auch die Wassermenge, welche durch die Turbine fliesst, variiert. Hier ist ein besonderer Nachteil gegeben, da bei geringen Wasserdurchsatzmengen und beim Einsatz von kleinen Wurfdüsen die notwendige Fortbewegungsgeschwindigkeit nicht erreicht wird. Bei grossen Wasserdurchsatzmengen wird der Wirkungsgrad negatv beeinflusst und zwar durch den hohen Druckverlust in der Turbine. Eine Regelung der Fahrgeschwindigkeit kann nur durch eine Störschraube bewirkt werden, welche wiederum den Wasser-Eintrittsstartstrahl in die Turbine stört.

Der vorliegenden Erfindung liegt die Aufgabe zugrunde, ein Verfahren zum Betreiben eines selbstfahrenden Bewässerungsgerätes und ein entsprechendes selbstfahrendes Bewässerungsgerät zu schaffen, dessen Betrieb wesentlich variabler möglich ist und dessen Einsatzmöglichkeiten auch bei relativ geringen Wasserdrücken erhalten bleiben.

Zur Lösung dieser Aufgabe führt, dass vor der Beregnungseinrichtung ein Teil des Bewässerungswassers abgezweigt und der Turbine zugeführt wird.

Das bedeutet, dass nicht mehr das gesamte Bewässerungswasser durch die Turbine geführt wird, sondern die Turbine wird über eine Zweigleitung mit einem Teil des Bewässerungswassers gespeist. Damit stören sich aber Beregnungseinrichtung und Turbine nicht mehr, sondern sind funktionell von einander getrennt.

Besonders hervorzuheben ist, dass jetzt die Möglichkeit besteht, die Fahrgeschwindigkeit zu regeln, ohne dabei wesentlichen Einfluss auf die Bewässerung zu nehmen. Durch ein Ventil in der Zweigleitung zur Turbine kann diejenige Menge an abgezweigtem Wasser bestimmt werden, welche der Turbine bzw. der Antriebsdüse für die Turbine zugeführt wird. Ob mehr oder weniger Wasser über die Zweigleitung entnommen wird, spielt für die Beregnung kaum eine Rolle. Bei einer höheren Entnahme wird höchstens die Wurfweite geringfügig geringer.

Durch die vorliegende Erfindung ist es aber auch möglich, ein Bewässerungsgerät im Druckbereich des Wassers unter 3 bar einzusetzen, was mit den bisher bekannten Bewässerungsgeräten nicht geschafft wird.

Ein weiteres Augenmerk der Erfindung, für das auch selbständiger Schutz begehrt wird, bezieht sich auf die Ausgestaltung der Turbine selbst. Die Turbine soll kreissägenartig geformt sein, wobei jeder einzelne Zahn der Turbine eine Rückspülkammer ausbildet. D.h., der Zahn ist entgegen der Drehrichtung der Turbine nach hinten gewölbt ausgebildet, so dass sich das Wasser in dieser Rückspülkammer verfangen kann, wobei der Strahl in der Rückspülkammer umgelenkt wird, jedoch nicht in der Strahlrichtung, sondern parallel zur Strahlrichtung. Damit stört dieser nach hinten zurück gerichtete Strahl nicht den Antriebsstrahl.

Sofern eine derartige Turbine im Zusammenhang mit dem Antrieb des Bewässerungsgerätes durch Abzweigen eines Teils des Bewässerungswassers eingesetzt wird, kann diese Turbine völlig offen ohne ein Turbinengehäuse ausgebildet sein oder aber lediglich einseitig durch eine Kreisplatte abgedeckt werden. Dies hat noch den Vorteil, dass das abgezweigte Bewässerungswasser einen nahen Umkreis um das Bewässerungsgerät bewässert.

Eine weitere Verbesserung betrifft die Selbststeuerung des Bewässerungsgerätes. Auch für diese Merkmale wird selbständiger Schutz begehrt. Das Gerät soll mit einem automatischen Selbsthalt und/oder einem Überlastschutz ausgestattet sein. Hierzu ist in dem Wasseranschluss ein drehbares Schliessventil vorgesehen, wobei auf einer nach aussen führenden Welle ein Hebel angeordnet ist. Mittels dieses Hebels kann das Schliessventil gegen die Kraft eines Kraftspeichers geöffnet werden. In der Öffnungslage wird der Hebel festgelegt, sofern das Bewässerungsgerät fahren soll.

Der Einfachheit halber handelt es sich bei dem Kraftspeicher um eine Schraubenfeder, welche etwa tangential zu der Welle des Schliessventils verläuft und einerseits an einem Chassis des Geräts und andererseits an einer Lasche festgelegt ist, welche wiederum der Welle gegenüber dem Hebel aufsitzt. Wird der Hebel losgelassen, zieht die Schraubenfeder die Lasche an, sodass der Hebel schwenkt und die Welle dreht.

Zur Festlegung des Hebels in Öffnungslage des Schliessventils ist eine Rastklinke vorgesehen, die eine Stecköffnung zur Aufnahme des Hebels besitzt. Die Rastklinke wiederum ist drehbar gelagert, so dass bei Drehen der Rastklinke der Hebel ausser Eingriff mit der Stecköffnung gelangen kann.

Die Rastklinke wiederum steht über ein Zugelement mit zumindest einer Auslöseeinrichtung in Verbindung. Bei dieser Auslöseeinrichtung kann es sich einmal um einen automatischen Selbsthalt handeln, sofern das Bewässerungsgerät sein Endziel erreicht hat. Hierzu ist das Zugelement mit einem Drehhebel verbunden, der um eine Drehachse dreht. Anderenends wird das Zugseil, welches auf die Trommel aufgerollt wird, durch eine entsprechende Öffnung in dem Drehhebel geführt. Am Ende des Weges des Bewässerungsgerätes soll auf dem Zugseil ein Anschlag, beispielsweise eine Hülse aufsitzen, welche so dimensioniert ist, dass sie nicht durch die Öffnung in dem Drehhebel rutschen kann. Gelangt somit dieser Anschlag an den Drehhebel, nimmt er den Drehhebel mit und dreht diesen um die Drehachse, wobei gleichzeitig an dem Zugelement gezogen wird. Dies bewirkt, dass die Rastklinke um ihre Drehachse dreht, und damit der Hebel ausser Eingriff mit der Stecköffnung gelangt. Die Schraubenfeder zieht an der Lasche und dreht die Welle des Schliessventils in Schliesslage.

In einem bevorzugten Ausführungsbeispiel der Erfindung ist daran gedacht, diesem Zugelement einen Überlastschutz zuzuordnen. Der Einfachheit halber wird mit dem Zugelement ein Schubstift verbunden, der beispielsweise in einem Schlitz einer Chassiswand geführt ist. Diesem Schubstift wiederum wird ein federgelagerter Auslöser zugeordnet, der mit der Turbine in Verbindung steht.

Sollte sich beispielsweise der Bewässerungsschlauch verfangen, so wird über die Turbine nach wie vor ein Zug auf den Bewässerungsschlauch ausgeübt, die Trommel zum Aufrollen des Zugseiles aber nicht mehr gedreht. Durch die Turbinenkraft wird jedoch die Federkraft, welche den Auslöser zurückhält, überwunden, sodass dieser bei seiner Drehung auf den Schubstift trifft und diesen verschiebt. Über den Schubstift wird auch das Zugelement verschoben und die Rastklinke, wie oben beschrieben, betätigt.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine Seitenansicht eines erfindungsgemässen selbstfahrenden Bewässerungsgerätes;
Figur 2 eine Draufsicht auf das Bewässerungsgerät gemäss Figur 1;
Figur 3 eine Draufsicht auf eine erfindungsgemässe Turbine;
Figur 4 einen teilweise aufgebrochen dargestellten Querschnitt durch das Bewässerungsgerät entgegen der Fahrtrichtung gesehen;
Figur 5 einen teilweise aufgebrochen dargestellten Querschnitt durch das Bewässerungsgerät in Fahrtrichtung gesehen ohne aufgewickeltes Zugseil;
Figur 6 eine vergrössert dargestellte Seitenansicht eines Ausschnittes aus dem Bewässerungsgerät gemäss Figur 1.

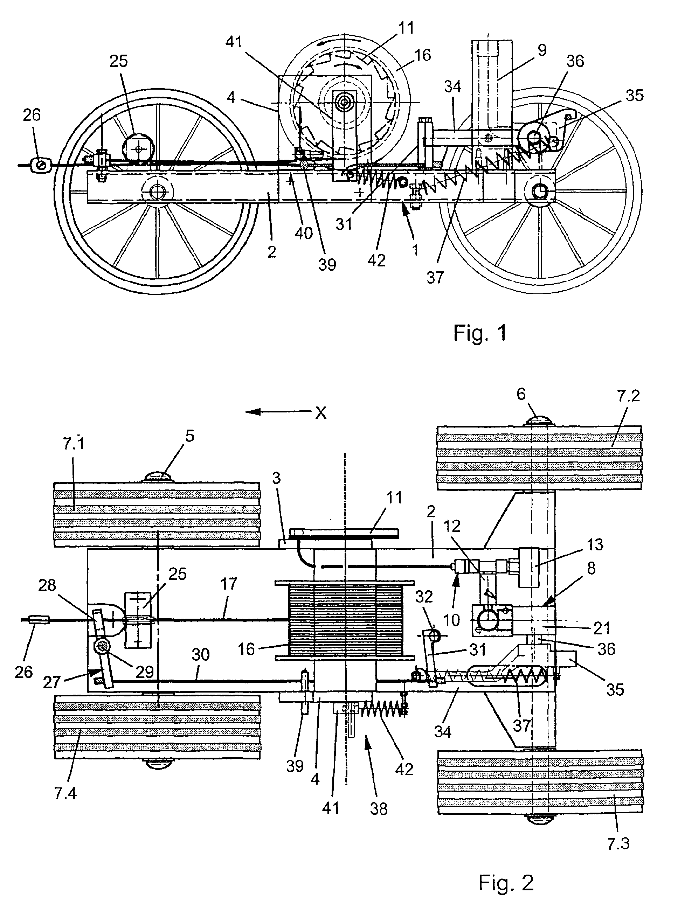

Ein erfindungsgemässes selbstfahrendes Bewässerungsgerät weist gemäss Figur 1 ein Chassis 1 auf, welches im wesentlichen aus einer Bodenplatte 2 und zwei Chassiswände 3 und 4 besteht. Die Bodenplatte 2 wird gemäss Figur 2 von einer Vorderachse 5 und einer Hinterachse 6 durchsetzt, an denen Räder 7.1 bis 7.4 festgelegt sind.

Auf der Bodenplatte 2 befindet sich ein Wasseranschluss 8, der von einem in Figur 1 strichpunktiert angedeuteten Wasserkanal 9 durchsetzt ist. Im vorliegenden Ausführungsbeispiel ist der Wasseranschluss 8 ein blockförmiges Bauelement, vorzugsweise aus Aluminium, wobei dieses Bauelement entsprechende Längs- und Querbohrungen zur Bildung des Wasserkanals aufweist. Im übrigen soll auch die Bodenplatte 2 aus einem Kastenprofil aus Aluminium bestehen, damit möglichst Gewicht gespart wird.

Auf dem Wasseranschluss 8 sitzt eine nicht näher gezeigte Beregnungseinrichtung auf, die beispielsweise einen oder mehrere drehbare Regenarme besitzt. Diese Beregnungseinrichtung ist bekannt, weshalb auf eine nähere Beschreibung verzichtet wird.

Von dem Wasseranschluss 8 zweigt eine Leitung 10 ab, die zu einer Turbine 11 führt. In die Leitung 10 ist ein regelbares Ventil 12 eingesetzt, über welches die Teilmenge des dem Wasseranschluss 8 bzw. aus dem Wasserkanal 9 entnommenen Wassers geregelt werden kann. Der Wasserdruck in dieser Leitung 10 wird mittels eines Druckmessers 13 ermittelt.

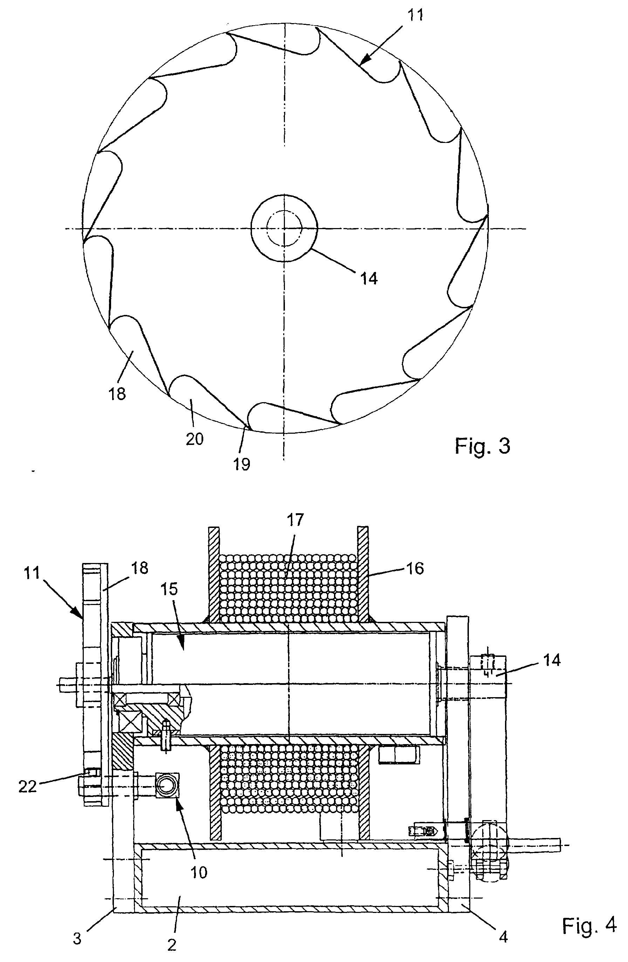

In den Figuren 3, 4 und 6 ist erkennbar, dass die Turbine 11 kreissägeblattartig ausgebildet ist. Sie sitzt auf einer Welle 14 auf, über die sie mit einem Planetengetriebe 15 verbunden ist, welches eine Trommel 16 zum Aufwickeln eines Zugseiles 17 antreibt. Da ein derartiges Planetengetriebe 15 handelsüblich ist, soll auf eine weitere Beschreibung verzichtet werden.

Planetengetriebe 15, Welle 14 und Trommel 16 sind zwischen den beiden Chassiswänden 3 und 4 gelagert, wobei die Welle 14 die Chassiswände 3 und 4 durchsetzt.

Fahrzeugseitig liegt der Turbine 11 eine Kreisplatte 18 an, ansonsten ist die Turbine 11 offen. Jeder Sägezahn 19 der Turbine 11 ist so ausgestaltet, dass eine Rückspülkammer 20 gebildet wird.

Die Funktionsweise des erfindungsgemässen Bewässerungsgerätes ist folgende:

In Funktion soll das Bewässserungsgerät selbstfahrend beispielsweise einen Sportplatz ablaufen. Hierzu wird das Zugseil 17 an einem Ende des Sportplatzes festgelegt und das Bewässerungsgerät zum anderen Ende des Sportplatzes geführt, wobei das Zugseil 17 von der Trommel 16 abrollt. An den Wasseranschluss 8 wird beispielsweise ein Wasserschlauch angekoppelt. Ein Schliessventil 21, welches in dem Wasseranschluss 8 noch vor der Leitung 10 vorgesehen ist, verhindert, dass Wasser in den Wasseranschluss 8 eintritt.

Wird nun dieses Schliessventil 21 geöffnet, strömt Wasser in den Wasserkanal 9 ein und gelangt in die Beregnungseinrichtung, mittels der das Wasser weit ausgebracht wird.

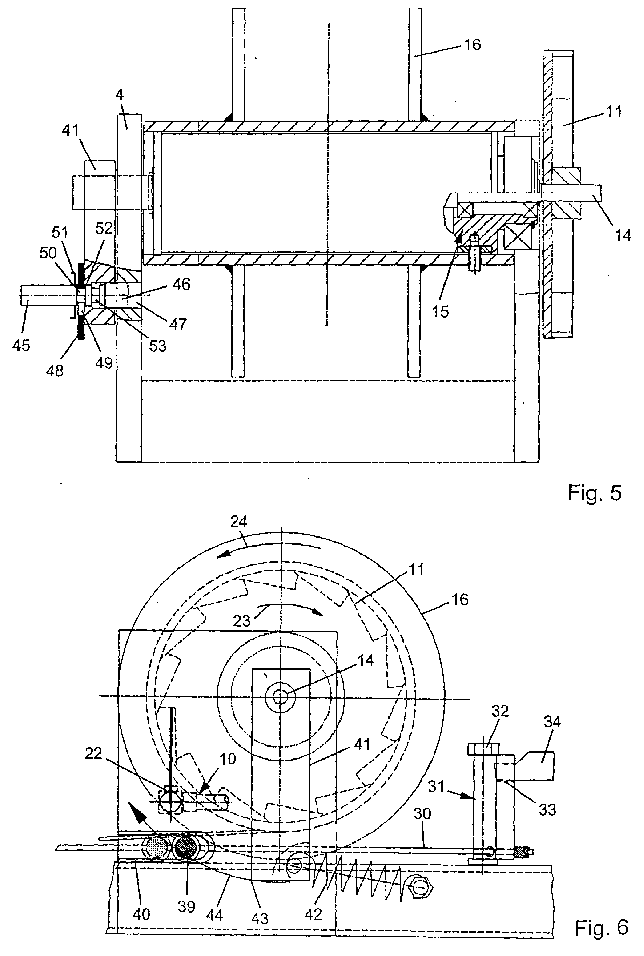

Wird nun das Ventil 12 geöffnet, strömt Wasser aus dem Wasserkanal 9 auch in die Leitung 10 ein. Dieses Wasser tritt aus der Leitung 10 durch eine in den Figuren 4 und 6 gezeigte Düse 22 aus, wobei diese Düse tangential zu der Turbine 11 und nach oben ausgerichtet ist. Das Wasser fängt sich in den von den Sägezähnen 19 gebildeten Rückspülkammern 20, so dass die Turbine 11 in Drehrichtung im Uhrzeigersinn gemäss Pfeil 23 versetzt wird. Durch den entgegen der Drehrichtung gekrümmten Sägezahn 19 wird die Rückspülkammer 20 besonders gehöhlt ausgebildet, wodurch bewirkt wird, dass das Wasser wesentlich besser in dieser Rückspülkammer 20 eingefangen und die gesamte Druckkraft des Wassers auf den Sägezahn 19 und damit die Turbine 11 aufgebracht wird. Gleichzeitig hat diese Anordnung und insbesondere auch das nach oben gerichtete Ausbringen des Wassers den Vorteil, dass der Bereich um das Bewässerungsgerät durch dieses Zweigwasser ebenfalls bewässert wird.

Die Drehung der Turbine 11 in Pfeilrichtung 23 wird, wie oben erwähnt, über das Planetengetriebe 15 auf die Trommel 16 übertagen, wobei diese Trommel 16 entgegen dem Uhrzeigersinn in Pfeilrichtung 24 (siehe Figur 6) gedreht wird. Dies bewirkt gemäss Figur 2, dass das Zugseil 17 eingeholt wird, und sich das Bewässerungsgerät in Fahrtrichtung x bewegt. Dabei wird das Zugseil 17 noch in einer Führungsrolle 25, die auf der Bodenplatte 2 befestigt ist, geführt.

Über das Ventil 12 kann im übrigen die Geschwindigkeit des Bewässerungsgerätes eingestellt werden. Je mehr Wasser in die Leitung 10 eingegeben wird, umso mehr erhöht sich der Druck des Wassers, der aus der Düse 22 auf die Turbine 11 ausgebracht wird und umso schneller fährt das Bewässerungsgerät. Der entsprechende Druck in der Leitung 10 wird auf dem Druckmesser 13 abgelesen.

Da es sich um ein selbstfahrendes Bewässerungsgerät handelt, sollte gegen Ende der gewünschten Fahrt auch ein selbsttätiger Halt stattfinden. Hierzu ist dem Zugseil 17 ein Anschlag 26 zugeordnet, der einen Drehhebel 27 betätigt. Hierzu durchsetzt das Zugseil 17 eine nur angedeutete Öffnung 28 in dem Drehhebel 27 an dessen einem Ende, wobei die Öffnung 28 so dimensioniert ist, dass zwar das Zugseil 17 durch sie hindurchgleiten kann, nicht jedoch der Anschlag 26. Trifft somit der Anschlag 26 auf den Drehhebel 27, dreht dieser um eine Drehachse 29 und nimmt jenseits der Öffnung 28 ein Zugelement 30, beispielsweise eine Zugstange, ein Zugseil od.dgl. mit.

Das Zugelement 30 verbindet den Drehhebel 27 mit einer Rastklinke 31, welche wiederum drehbar um eine Vertikalachse 32 auf der Bodenplatte 2 aufsitzt. Diese Rastklinke 31 besitzt eine Stecköffnung 33, in die ein Hebel 34 eingesetzt werden kann.

Wird nun der Drehhebel 27 bewegt und zieht damit an dem Zugelement 30, dreht die Rastklinke 31 um die Vertikalachse 32, so dass der Hebel 34 aus der Öffnung 33 gleitet und damit freigegeben wird. Nunmehr tritt eine Feder 37 (siehe Figur 1) in Funktion, welche einerseits an der Bodenplatte 2 festliegt und andererseits mit einer Lasche 35 jenseits des Hebels 34 verbunden ist. Dabei verläuft die Schraubenfeder 37 etwa tangential zu einer Welle 36, welche das Schliessventil 21 betätigt. Damit wird dieses Schliessventil 21 geschlossen und kein Wasser mehr auf die Beregnungseinrichtung bzw. die Turbine 11 übertragen. Das Bewässerungsfahrzeug steht still.

Es kann dann wieder versetzt und neu ausgerichtet werden und seine Fahrt und Bewässerung fortsetzen, indem der Hebel 34 gegen die Kraft der Schraubenfeder 37 gedreht und damit das Schliessventil 21 geöffnet wird. Im Bereich der Stecköffnung 33 wird der Hebel 34 in diese Öffnung 33 eingesteckt, wobei die Rastklinke 31 entgegensetzt um die Vertikalachse 32 gedreht wird.

Erfindungsgemäss ist ferner auch ein Überlastschutz 38 vorgesehen. Dieser wird am besten anhand der Figuren 1, 2, 5 und 6 beschrieben.

Ein Element dieses Überlastschutzes 38 ist ein Schubstift 39, welcher fest mit dem Zugelement 30 verbunden ist, mit seinem freien Ende aber in einem Schlitz 40 in der Chassiswand 4 geführt ist. Diesem Zugstift 39 ist ein Auslöser 41 zugeordnet, beispielsweise ein einfacher Werkstoffstreifen, der drehfest mit der Welle 14 verbunden ist, auf der auch die Turbine 11 aufsitzt.

Der Auslöser 41 wird in einer gewünschten Ausgangslage durch eine Schraubenfeder 42 gehalten, welche eine bestimmte Kraft aufweist.

Bleibt nun beispielsweise der Schlauch, der mit dem Wasseranschluss 8 verbunden ist, irgendwo hängen, so wird ein Zug entgegen der Fahrtrichtung x auf das Bewässerungsgerät ausgeübt. Die Turbine 11 dreht aber weiter in Pfeilrichtung 23 und nimmt dabei den Auslöser 41 in diese Richtung mit. Der Auslöser 41 trifft gemäss Figur 6 auf den Schubstift 39 und schiebt diesen in dem Schlitz 40 so weit, bis eine Steuerkante 43 des Auslösers 41 den Schubstift 39 überfahren kann, wie dies durch den Pfeil 44 dargestellt ist.

Bei diesem Verschieben des Schubstiftes 39 wird, wie auch durch den Drehhebel 27, die Rastklinke 31 um die Vertikalachse 32 bewegt, der Hebel 34 gelangt ausser Eingriff mit der Stecköffnung 33, so dass das Schliessventil 21 durch die Schraubenfeder 37 geschlossen werden kann.

Der Überlastschutz kann auch ausser Kraft gesetzt werden, wie dies in Figur 5 angedeutet ist. In diesem Fall wird der Auslöser 41 mittels eines Steckstiftes 45 gegenüber der Chassiswand 4 verriegelt. Der Steckstift 45 greift dabei mit einem Kopf 46 in eine Bohrung 47 in der Chassiswand 4 ein. Ein Schieber 48 hält den Steckstift 45 in dieser Lage, wobei der Schieber 48 ein Langloch 49 aufweist, welches sich im Bereich einer Umfangsnut 50 des Steckstiftes 45 bewegt. Nach aussen ist der Schieber 48 durch einen Splint 51 abgesichert.

Soll der Auslöser 41 freigegeben werden, wird der Schieber 48 angehoben, so dass dann ein Ringkragen 52 durch das Langloch 49 passt, und der Kopf 46 aus der Bohrung 47 herausgezogen werden kann.

Die Festlegung des Steckstiftes 45 in dieser entriegelten Lage erfolgt durch ein Einfallen des Schiebers 48 in eine zweite Ringnut 53, welche nach dem Ringkragen 52 in dem Steckstift 45 vorgesehen ist.

## Patentansprüche

1. Verfahren zum Betreiben eines selbstfahrenden Bewässerungsgerätes mit einer Beregnungseinrichtung mit Wasseranschluss (8) und einer Turbine (11), über welche eine Trommel (16) zum Aufwickeln eines Zugseiles (17) mittels Wasser angetrieben wird,
**dadurch gekennzeichnet,**
**dass** vor der Beregnungseinrichtung ein Teil des Bewässerungswassers abgezweigt und der Turbine (11) zugeführt und die Menge des abgezweigten Bewässerungswassers geregelt wird.

2. Selbstfahrendes Bewässerungsgerät mit einer Beregnungseinrichtung mit Wasseranschluss (8) und einer Turbine (11), über welche eine Trommel (16) zum Aufwickeln eines Zugseiles (17) mittels Wasser antreibbar ist, **dadurch gekennzeichnet, dass** von dem Wassseranschluss (8) vor der Beregnungseinrichtung eine Leitung (10) abzweigt und zur Turbine (11) führt.

3. Bewässerungsgerät nach Anspruch 2, **dadurch gekennzeichnet, dass** in die Leitung (10) ein regelbares Ventil (12) eingesetzt ist und diesem gegebenenfalls ein Druckmessgerät (13) zugeordnet ist.

4. Bewässerungsgerät nach Anspruch 2 oder 3, **dadurch gekennzeichnet, dass** die Leitung (10) etwa tangential zur Turbine (11) ausmündet, die gegebenenfalls fahrzeugseitig von einer Kreisplatte (18) abgedeckt ist.

5. Selbstfahrendes Bewässerungsgerät mit einer Beregnungseinrichtung mit Wasseranschluss (8) und einer Turbine (11), über welche eine Trommel (16) zum Aufwickeln eines Zugseiles (17) mittels Wasser antreibbar ist, **dadurch gekennzeichnet, dass** die Turbine (11) kreissägenartig geformt ist, wobei jeder einzelne Zahn (19) der Turbine (11) eine Rückspülmmer (20) ausbildet.

6. Bewässerungsgerät nach einem der Ansprüche 2 - 5, **dadurch gekennzeichnet, dass** die Turbine 11 über ein Planetengetriebe (15) mit der Trommel (16) verbunden ist.

7. Selbstfahrendes Bewässerungsgerät mit einer Beregnungseinrichtung mit Wasseranschluss (8) und einer Turbine (11), über welche eine Trommel (16) zum Aufwickeln eines Zugseiles (17) mittels Wasser antreibbar ist, **dadurch gekennzeichnet, dass** dem Wasseranschluss (8) ein automatischer Selbsthalt und/oder ein Überlastschutz (38) zugeordnet ist.

8. Bewässerungsgerät nach Anspruch 7, **dadurch gekennzeichnet, dass** in dem Wasseranschluss (8) ein drehbares Schliessventil (21) vorgesehen und dessen nach aussen führende Welle (36) mit einem gegen die Kraft eines Kraftspeichers (37) an einer Rastklinke (31) festlegbaren Hebel (34) verbunden ist, wobei es sich bei dem Kraftspeicher um eine Schraubenfeder (37) handelt, welche etwa tangential zu der Welle (36) verläuft und einerseits an einem Chassis (1) des Gerätes und andererseits an einer Lasche (35) festgelegt ist, welche der Welle (36) aufsitzt.

9. Bewässerungsgerät nach Anspruch 8, **dadurch gekennzeichnet, dass** die Rastklinke (31) eine Stecköffnung (33) zur Aufnahme des Hebels (34) aufweist und drehbar gelagert ist, wobei die Rastklinke (31) über ein Zugelement (30) mit zumindest einer Auslöseeinrichtung (27, 39, 41) in Verbindung steht und das Zugelement (30) mit einem Drehhebel (27) verbunden ist, den andererseits einer Drehachse (29) das Zugseil (17) durchsetzt, wobei auf dem Zugseil (17) ein Anschlag (26) für den Drehhebel (27) vorgesehen ist.

10. Bewässerunggerät nach Anspruch 9, **dadurch gekennzeichnet, dass** auf dem Zugelement (30) ein Schubstift (39) festliegt, der in einem Schlitz (40) in einer Chassiswand (4) geführt ist, wobei dem Schubstift (39) ein federgelagerter Auslöser (41) zugeordnet ist, der mit der Turbine (11) in Verbindung steht.
